(19) Europäisches Patentamt
European Patent Office
Office européen des brevets

(11) EP 2 123 500 B1

(12) **EUROPÄISCHE PATENTSCHRIFT**

(45) Veröffentlichungstag und Bekanntmachung des Hinweises auf die Patenterteilung:
**22.09.2010 Patentblatt 2010/38**

(51) Int Cl.:
**B60K 31/00** *(2006.01)* **B60T 10/00** *(2006.01)*
**B60T 10/02** *(2006.01)*

(21) Anmeldenummer: **09006150.8**

(22) Anmeldetag: **06.05.2009**

(54) **Verfahren und Vorrichtung zur Ermittlung der Ein- und Ausschaltbedingung für eine Motorbremse einer Dauerbremsanlage eines Fahrzeuges, insbesondere eines Nutzfahrzeuges**

Method and device for determining the activation and deactivation condition for a motor brake of a long-term brake assembly of a vehicle, in particular a commercial vehicle

Procédé et dispositif de détermination des conditions de marche et d'arrêt pour un frein moteur d'une installation de frein continu d'un véhicule, notamment d'un véhicule utilitaire

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.05.2008 DE 102008023134**

(43) Veröffentlichungstag der Anmeldung:
**25.11.2009 Patentblatt 2009/48**

(73) Patentinhaber: **MAN Nutzfahrzeuge AG 80995 München (DE)**

(72) Erfinder:
• **Riegl, Stefan 82407 Wilzhofen (DE)**
• **Franke, Olaf 80807 München (DE)**

(56) Entgegenhaltungen:
**WO-A-02/47948**     **DE-A1- 4 408 350**
**DE-A1- 4 420 116**     **DE-A1- 4 446 109**
**DE-A1- 4 446 288**     **DE-A1-102004 057 123**
**US-A1- 2008 071 453**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Ermittlung der Ein- und Ausschaltbedingung für eine Motorbremseeinrichtung einer Dauerbremsanlage eines Fahrzeuges, insbesondere eines Nutzfahrzeuges, nach dem Oberbegriff des Anspruchs 1 sowie eine Vorrichtung zur Durchführung eines solchen Verfahrens nach dem Oberbegriff des Anspruchs 12.

Der Einsatz von Dauerbremsanlagen in Nutzfahrzeugen zur Entlastung der Betriebsbremse ist allgemein bekannt Ein Verfahen zur Anforderung bremsleistungsunterstützender Systeme für ein Fahrzeug ist beipielsweise aus der WO 02/47948 A1 bekannt geworden. Dauerbremsanlagen in Nutzfahrzeugen umfassen regelmäßig eine Retardereinrichtung, wie beispielsweise einen Sekundärretarder, und eine Motorbremseinrichtung, beispielsweise eine sogenannte schwarz/weiß-Motorbremse, die stufenlos zu- oder abgeschaltet werden kann. Für den Fall, dass ein Sekundärretarder und eine schwarz/weiß-Motorbremse verbaut ist, muss jedesmal entschieden werden, wann genau die Motorbremse aktiviert wird und wie viel Dauerbremsmoment vom Sekundärretarder eingestellt werden muss, damit das vorgegebene Dauerbremsmoment an einer Abtriebswelle eines Antriebsstranges in Summe möglichst genau eingestellt wird. Während ein Sekundärretarder ein Drehmoment erzeugt, das von der Abtriebswellendrehzahl abhängig ist, erzeugt die Motorbremse ein Drehmoment, das von der Motordrehzahl abhängig ist, wobei sich je nach Getriebeübersetzung somit ein unterschiedliches Moment an der Abtriebswelle ergibt. Der Sekundärretarder hat seinen opti malen Wirkungsbereich bei mittleren und höheren Abtriebswellendrehzahlen, während die Motorbremse im Vergleich dazu bei mittleren und hohen Motordrehzahlen den optimalen Wirkungsbereich aufweist. Bedingt durch die unterschiedlichen Getriebeübersetzungen führt dies aber dazu, dass die Motorbremse bei kleinen Gängen und damit einer großen Übersetzung ein hohes Moment an der Abtriebswelle erzeugt, welches das mögliche Moment des Sekundärretarders weit übersteigen kann. D. h., dass bei mittleren und hohen Abtriebswellendrehzahlen, wenn das maximale Moment des Sekundärretarders auf der Abtriebswelle größer ist als das Moment der Motorbremse ein vorgegebenes Dauerbremsmoment relativ genau eingestellt werden kann. Bei niedrigen Abtriebswellendrehzahlen kann dagegen, wenn das maximale Moment des Sekundärretarders auf der Abtriebswelle kleiner ist als das der Motorbremse, insbesondere einer schwarz/weiß-Motorbremse, das vorgegebene bzw. geforderte Dauerbremsmoment nicht immer genau eingestellt werden.

Ein weiteres Problem in Verbindung mit einer Motorbremseinrichtung stellt der Geräuschpegel dar, so dass es für ein hochwertiges Dauerbrems-Management erforderlich ist, eine Motorbremseinrichtung nur dann zuzuschalten, wenn dies für einen effektiven Einsatz der Dauerbremsanlage günstig ist. Insbesondere ein häufiges Aktivieren und Deaktivieren der Motorbremseinrichtung führt zu einer erheblichen Geräuschbelästigung.

Demgegenüber ist es Aufgabe der vorliegenden Erfindung, ein Verfahren zur Ermittlung der Ein- und Ausschaltbedingung für die Motorbremse einer Dauerbremsanlage eines Fahrzeuges, insbesondere eines Nutzfahrzeuges, sowie eine Vorrichtung zur Durchführung eines derartigen Verfahrens zur Verfügung zu stellen, mittels dem bzw. der die Anzahl der Ein- und Ausschaltvorgänge

der Motorbremseinrichtung effektiv gestaltet und insbesondere reduziert werden kann.

Diese Aufgabe wird bezüglich des Verfahrens gelöst mit den Merkmalen des Anspruchs 1. Vorteilhafte Ausgestaltungen hierzu sind Gegenstand der Unteransprüche.

Gemäß Anspruch 1 wird die Aktivierung und Deaktivierung der Motorbremseinrichtung in Abhängigkeit von wenigstens einem in Abhängigkeit von einer Abtriebswellendrehzahl der Abtriebswelle ermittelten Momentenschwellwert vorgegeben. Besonders bevorzugt wird dabei wenigstens ein abtriebswellendrehzahlabhängiger Momentenschwellwert ermittelt, der mit wenigstens einem Momenten-Vergleichswert, insbesondere mit einem angeforderten Bremsmoment, beispielsweise einem Dauerbremsmoment dergestalt verglichen wird, dass anhand des Vergleichsergebnisses die Aktivierung und Deaktivierung der Motorbremseinrichtung zu einem vorgegebenen Zeitpunkt bestimmt werden kann, insbesondere die Motorbremseinrichtung bei einer jeweils gewünschten, vorgegebenen Abtriebswellendrehzahl bzw. -moment aktiviert oder deaktiviert wird.

Mit einer derartigen erfindungsgemäßen Verfahrensführung kann in Abhängigkeit von z. B. in Form von Kennlinien in einer Steuereinrichtung der Dauerbremsanlage abgelegten, abtriebswellendrehzahlabhängigen Momentenschwellwerten für eine vorgegebene Abtriebswellendrehzahl auf einfache Weise ermittelt werden, ob eine Motorbremseinrichtung zugeschaltet werden muss oder nicht. Der wenigstens eine Momentenschwellwert wird bevorzugt so vorgegebenen bzw. parametriert, dass dabei verschiedene gewünschte Dauerbremssituationen berücksichtigt werden können, so z. B. dass bei hohen Abtriebswellendrehzahlen, wenn die Bremsenergie sehr hoch ist, die

Motorbremseinrichtung möglichst frühzeitig aktiviert wird, während bei mittleren Abtriebswellendrehzahlen, wenn die Bremsenergie noch nicht sehr hoch ist, zur Vermeidung eines hohen Geräuschpegels, die Motorbremseinrichtung demgegenüber später aktiviert wird. Dementsprechend können mehrere unterschiedliche Abtriebswellendrehzahlbereiche vorgegeben und entsprechend in der Steuereinrichtung abgelegt sein, so dass bei einem ersten Abtriebswellendrehzahlbereich bildenden hohen Abtriebswellendrehzahlen, die beispielsweise im Bereich ab 1500 U/minliegen, die Motorbremseinrichtung zu einem früheren Zeitpunkt aktiviert wird als bei demgegenüber niedrigeren, nicht im ersten Abtriebswellendrehzahlbereich liegenden Abtriebswellendrehzahlen. Die Drehzahlen dieses niedrigeren Abtriebswellendrehzahlbereiches liegen beispielsweise im Bereich von 600 bis 1500 U/min.

Besonders bevorzugt ist es hierbei, die gegenüber dem ersten Abtriebswellendrehzahlbereich niedrigeren Abtriebswellendrehzahlen in einen sich an den ersten Abtriebswellendrehzahlbereich anschließenden zweiten, mittleren Abtriebswellendrehzahlbereich und in einen sich an diesen mittleren Abtriebswellendrehzahlbereich anschließenden, demgegenüber niedrigere Abtriebswellendrehzahlen aufweisenden dritten, Abtriebswellendrehzahlbereich aufzuteilen, wobei dieser dritte, untere Abtriebswellendrehzahlbereich in einem Bereich unter 600 U/min liegen kann und solche Abtriebswellendrehzahlen umfasst, bei denen kein stufenloser Übergang zwischen einer insbesondere als schwarz/weiß-Motorbremse ausgebildeten Motorbremseinrichtung und der Retardereinrichtung, insbesondere einen Sekundärretarder möglich ist.

Gemäß einer weiteren speziellen Ausgestaltung und Verfahrensführung hierzu, kann zudem vorgesehen sein, dass im mittleren Abtriebswellendrehzahlbereich die Motorbremseinrichtung, wie zuvor geschildert, zu einem späteren Zeitpunkt aktiviert wird als im ersten, oberen Abtriebswellendrehzahlbereich.

Im dritten, unteren Abtriebswellendrehzahlbereich wird dagegen bevorzugt bei Erreichen eines in Abhängigkeit von einem für die aktuelle Abtriebswellendrehzahl vorgegebenen Motorbrems-Momentenschwellwertes die Motorbremseinrichtung aktiviert. Bei einer derartigen Verfahrensführung wird berücksichtigt, dass im unteren Abtriebswellendrehzahlbereich kaum Retardermoment zur Verfügung steht, sondern im Wesentlichen nur das Motorbremsmoment; ist die Motorbremseinrichtung aber als scharz/weiß-Motorbremse ausgebildet, die nur voll zugeschalten oder voll abgeschalten werden kann, dann wird bei den niedrigen Abtriebswellendrehzahlen gegebenenfalls zu viel oder zu wenig Moment mittels der Motorbremseinrichtung geliefert. Mit der eben geschilderten bevorzugten Erfindungsvariante soll dann schwellwertabhängig festgelegt werden, wann bei bestimmten Abtriebswellendrehzahlen bzw. Abtriebswellendrehzahlenbereichen die Motorbremse tatsächlich zugeschaltet wird. D. h., die Einstellung kann so vorgegeben werden, dass die Motorbremseinrichtung z. B. grundsätzlich erst so spät wie möglich dazugeschalten wird; wenn die Motorbremseinrichtung dann aber einmal aktiviert ist, soll sie auch so lange wie möglich aktiviert bleiben, um überflüssige Ein-/Ausschaltvorgänge der Motorbremseinrichtung, mit den bekannten Nachteilen (z. B. hoher Geräuschpegel) zu vermeiden.

Gemäß einer konkreten kennlinienbasierten Verfahrensführung können auf der Basis eines bezogen auf eine bestimmte Abtriebswellendrehzahl verfügbaren Retardermomentes ein Retarder-Momentenschwellwert und auf der Basis eines bezogen auf eine bestimmte Abtriebswellendrehzahl verfügbaren Motorbremsmomentes ein Motorbrems-Momentenschwellwert dergestalt vorgegeben werden, dass die Motorbremseinrichtung dann aktiviert wird, wenn sowohl der Retarder-Momentenschwellwert als auch der Motorbrems-Momentenschwellwert jeweils kleiner ist als ein einen Momenten-Vergleichswert bildendes, mittels einer Steuereinrichtung der Dauerbremsanlage angefor dertes Dauerbremsmoment. Besonders bevorzugt ist hierbei eine Verfahrensführung, gemäß der für eine aktuelle Abtriebswellendrehzahl ein maximal verfügbares Retardermoment und ein maximal verfügbares Motorbremsmoment bestimmt wird, so dass der Retarder-Momentenschwellwert auf der Basis des maximalen verfügbaren Retardermomentes und der Motorbrems-Momentenschwellwert auf der Basis des maximal verfügbaren Motorbremsmomentes bestimmt werden. Eine derartige konkrete Verfahrensführung lässt sich auf schnelle und einfache Weise mit hoher Funktionssicherheit in Verbindung mit einer Steuereinrichtung realisieren. Besonders bevorzugt ist hierbei ferner vorgesehen, dass die Motorbremseinrichtung deaktiviert wird, wenn das für das Dauerbremsmoment angeforderte Retardermoment kleiner als ein für einen optimalen Retarder-Arbeitsbereich vorgegebener Momentenschwellwert ist.

Weiter wird das Retardermoment gemäß einer bevorzugten Verfahrensführung bei aktivierter, als schwarz-/weiß-Motorbremse ausgebildeter Motorbremseinrichtung in der Höhe des Betrages des zugeschalteten Motorbremsmomentes substituiert.

Der Retarder-Momentenschwellwert wird bevorzugt nach folgender Gleichung gebildet:

$$M_{\text{Schwell-Retarder}} = M_{\text{Max-Retarder}} (n_{\text{Abtriebswelle}}) * \text{Faktor}_{\text{Retarder}} (n_{\text{Abtriebswelle}})$$

In analoger Weise wird der Motorbrems-Momentenschwellwert nach folgender Gleichung berechnet:

$$M_{\text{Schwell-Motorbremse}} = M_{\text{Max-Motorbremse}} (n_{\text{Abtriebswelle}}) * \text{Faktor}_{\text{Motorbremse}} (n_{\text{Abtriebswelle}})$$

$M_{\text{Max-Retarder}}$ bezeichnet dabei das maximal verfügbare Drehmoment des Retarders für eine aktuelle Abtriebs-wellendrehzahl, während $M_{\text{Max-Motorbremse}}$ das maximal verfügbare Drehmoment der Motorbremseinrichtung für eine aktuelle Abtriebswellendrehzahl bei der aktuellen Getriebeübersetzung bezeichnet. $n_{\text{Abtriebswelle}}$ bezeichnet jeweils die aktuelle Abtriebswellendrehzahl. In Verbindung mit der Abhängigkeit des Motorbremsmomentes von der Abtriebswellendrehzahl sei hier ergänzend nochmals ausdrücklich klargestellt, dass diese Abhängigkeit hier so zu verstehen ist, dass für eine bestimmte Motordrehzahl in Verbindung mit einer bestimmten Getriebeübersetzung ein bestimmtes Motorbremsmoment bei der aktuellen Abtriebswellendrehzahl zur Verfügung gestellt wird.

Sowohl der Faktor$_{Retarder}$ als auch der Faktor$_{Motorbremse}$ werden dabei jeweils in Abhängigkeit von einem vorgegebenen Zuschaltzeitpunkt der Motorbremseinrichtung für definierte Belastungszustände und/oder Dauerbremsanforderungen vorgegeben.

Bezüglich der Vorrichtung wir die Aufgabe gelöst mit den Merkmalen des Anspruchs 12. Weitere vorteilhafte Ausgestaltungen hierzu sind Gegenstand der darauf rückbezogenen Unteransprüche. Die mit der Vorrichtung erzielbaren Vorteile sind bereits in Verbindung mit der Verfahrensführung ausführlich dargelegt worden, so dass diesbezüglich darauf verwiesen wird.

Die Erfindung wird nachfolgend anhand einer einzigen Figur näher erläutert.

Die einzige Figur zeigt schematisch ein Diagramm, bei der für einen bestimmten Fahrzustand, bei dem eine Dauerbremsmomentenanforderung an die Dauerbremsanlage gestellt wird, mittels einer geeigneten Einrichtung, z. B. einer entsprechenden Sensorik eine aktuelle Drehzahl einer Abtriebswelle des

Antriebsstrangs ermittelt wird. Auf der Basis dieser Abtriebswellendrehzahl wird dann von einer Steuereinrichtung ein Retarder-Momentenschwellwert eines Sekundärretarders sowie ein Bremsmomenten-Momentenschwellwert für eine schwarz/weiß-Motorbremse ermittelt, und zwar gemäß der nachfolgenden Gleichungen, wobei $M_{Max-Retarder}$ und $M_{Max-Motorbremse}$ hier das für die aktuelle Abtriebswellendrehzahl maximal vefügbare Retardermoment bzw. Motorbremsmoment darstellen:

$$M_{Schwell-Retarder} = M_{Max-Retarder} (n_{Abtriebswelle}) * Faktor_{Retarder} (n_{Abtriebswelle})$$

$$M_{Schwell-Motorbremse} = M_{Max-Motorbremse} (n_{Abtriebswelle}) * Faktor_{Motorbremse} (n_{Abtriebswelle})$$

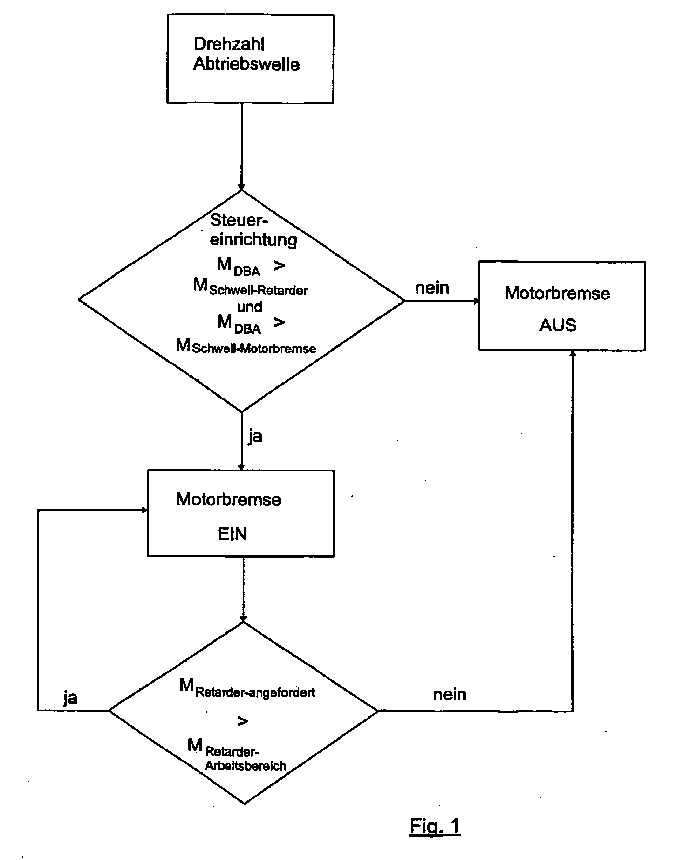

wobei der Faktor$_{Motorbremse}$ und der Faktor$_{Retarder}$ jeweils mit einem Wert von z. B. 1,2 vorgegeben werden. Selbstverständlich sind auch andere bzw. unterschiedliche Werte zwischen den beiden Faktoren möglich sind. Ein derartiger Faktor >1 bewirkt, dass die beiden Momentenschwellwerte größer sind als beispielsweise bei einem Faktor Retarder und einem Faktor Motorbremse von z. B. 1, so dass das in der Fig. 1 vorgegebene Kriterium, nämlich dass einer der beiden Schwellwerte kleiner ist als ein angefordertes Dauerbremsmoment $M_{DBA}$ und damit das Einschaltkriterium für die Motorbremse erst später erreicht wird als dies bei einem Faktor von jeweils 1 der Fall wäre.

Wird von der Steuereinrichtung ermittelt, dass das angeforderte Dauerbremsmoment $M_{DBA}$ größer als jeder der beiden ermittelten Schwellwerte ist, wird die Motorbremse aktiviert; für den Fall, dass das angeforderte Dauerbremsmoment kleiner sein sollte als einer der beiden Schwellwerte, bleibt die Motorbremse deaktiviert.

Mit einer derartigen Verfahrensführung kann durch entsprechende Vorgabe der abtriebswellendrehzahlabhängigen Momentenschwellwert-Kennlinien für die Retardereinrichtung und die Motorbremseinrichtung auf einfache Weise festgelegt werden, dass die Motorbremse grundsätzlich erst relativ spät aktiviert wird.

Falls die Motorbremse aktiviert wird, wird ferner wiederum mittels der Steuereinrichtung überprüft, ob eine Deaktivierung der Motorbremse erfolgen soll. Dies ist im vorliegenden Beispiel der Fall, wenn das vom Sekundärretarder angeforderte Bremsmoment $M_{Retarderangefordert}$ kleiner als ein Momentenschwellwert ist, der einen optimalen Arbeitsbereich des Sekundärretarders definiert, z. B. im Bereich von 800 Nm. Ist diese Bedingung erfüllt, bleibt die Motorbremse aktiviert; für den Fall, dass diese Bedingung nicht mehr erfüllt sein sollte, wird die Motorbremse deaktiviert.

Dadurch wird gewährleistet, dass eine aktivierte Motorbremse in jeder Fahrsituation möglichst lange aktiviert gelassen werden kann, wodurch die unerwünschten Ein/Ausschalteffekte der Motorbremse somit weitestgehend bzw. in einer optimierten Weise vermieden werden können.

**Patentansprüche**

1. Verfahren zur Ermittlung der Ein- und Ausschaltbedingung für eine Motorbremseinrichtung einer Dauerbremsanlage eines Fahrzeugs, insbesondere eines Nutzfahrzeuges,
   bei dem in Abhängigkeit von vorgegebenen Fahrparametern ein Dauerbremsmoment an einer Abtriebswelle eines Abtriebsstrangs mittels eines von einer Steuereinrichtung der Dauerbremsanlage von einer Retardereinrichtung angeforderten Bremsmomentes eingestellt wird,
   **dadurch gekennzeichnet,**

   - **dass** das Bremsmoment auch von einer Motorbremseinrichtung angefordert wird;

- **dass** die Aktivierung und Deaktivierung der Motorbremseinrichtung in Abhängigkeit von wenigstens einem in Abhängigkeit von einer Abtriebswellendrehzahl der Abtriebswelle ermittelten Momentenschwellwert vorgegeben wird.

2. Verfahren nach Anspruch 1, **dadurch gekennzeichnet, dass** die Aktivierung und Deaktivierung der Motorbremseinrichtung in Abhängigkeit von einer Abtriebswellendrehzahl der Abtriebswelle dergestalt vorgegeben wird, dass wenigstens ein abtriebswellendrehzahlabhängiger Momentenschwellwert ermittelt wird, der mit wenigstens einem Momenten-Vergleichswert, insbesondere mit einem angeforderten Bremsmoment, dergestalt verglichen wird, dass anhand des Ver gleichsergebnisses die Motorbremseinrichtung bei einer vorgegebenen Abtriebswellendrehzahl und/oder einem vorgegebenen Abtriebswellenmoment aktiviert oder deaktiviert wird.

3. Verfahren nach Anspruch 1 oder 2, **dadurch gekennzeichnet, dass** der wenigstens eine Momentenschwellwert so vorgegeben wird, dass bei, einen ersten Abtriebswellendrehzahlbereich bildenden, hohen Abtriebswellendrehzahlen die Motorbremseinrichtung zu einem früheren Zeitpunkt aktiviert wird als bei demgegenüber niedrigeren, nicht im ersten Abtriebswellendrehzahlbereich liegenden Abtriebswellendrehzahlen.

4. Verfahren nach Anspruch 3, **dadurch gekennzeichnet, dass** die gegenüber dem ersten Abtriebswellendrehzahlbereich niedrigeren Abtriebswellendrehzahlen in einen sich an den ersten Abtriebswellendrehzahlbereich anschließenden zweiten, mittleren Abtriebswellendrehzahlbereich und in einen sich an diesen mittleren Abtriebswellendrehzahlbereich anschließenden, demgegenüber niedrigere Abtriebswellendrehzahlen aufweisenden dritten, unteren Antriebswellendrehzahlbereich aufgeteilt ist, wobei der dritte, untere Abtriebswellendrehzahlbereich solche Abtriebswellendrehzahlen umfasst, bei denen kein stufenloser Übergang zwischen einer als schwarz-weiß-Motorbremse ausgebildeten Motorbremseinrichtung und der Retardereinrichtung möglich ist, und dass im mittleren Abtriebswellendrehzahlbereich die Motorbremseinrichtung zu einem späteren Zeitpunkt aktiviert wird als im ersten, oberen Abtriebswellendrehzahlbereich, während im dritten, unteren Abtriebswellendrehzahlbereich bei Erreichen eines in Abhängigkeit von einem für die aktuelle Abtriebswellendrehzahl vorgegebenen Motorbrems-Momentenschwellwertes die Motorbremseinrichtung aktiviert wird.

5. Verfahren nach einem der Ansprüche 1 bis 4, **dadurch gekennzeichnet, dass** auf der Basis eines bezogen auf eine bestimmte Abtriebswellendrehzahl verfügbaren Retardermomentes ein Retarder-Momentenschwellwert und auf der Basis eines bezogen auf eine bestimmte Abtriebswellendrehzahl verfügbaren Motorbremsmomentes ein Motorbrems-Momentenschwellwert dergestalt vorgegeben werden, dass die Motorbremseinrichtung dann aktiviert wird, wenn sowohl der Retarder-Momentenschwellwert als auch der Motorbrems-Momentenschwellwert kleiner ist als ein einen Momenten-Vergleichswert bildendes, mittels einer Steuereinrichtung der Dauerbremsanlage angefordertes Dauerbremsmoment, und dass die Motorbremseinrichtung deaktiviert wird, wenn das für das Dauerbremsmoment angeforderte Retardermoment kleiner als ein für einen optimalen Retarder-Arbeitsbereich vorgegebener Momentenschwellwert ist.

6. Verfahren nach Anspruch 5, **dadurch gekennzeichnet, dass** für eine aktuelle Abtriebswellendrehzahl ein maximal verfügbares Retardermoment und ein maximal verfügbares Motorbremsmoment bestimmt wird, dass auf der Basis des maximal verfügbaren Retardermomentes ein Retarder-Momentenschwellwert und auf der Basis des maximal verfügbaren Motorbremsmomentes ein Motorbrems-Momentenschwellwert dergestallt vorgegeben werden, dass die Motorbremseinrichtung aktiviert wird, wenn sowohl der Retarder-Momentenschwellwert als auch der Motorbrems-Momentenschwellwert kleiner ist als ein einen Momenten-Vergleichswert bildendes, mittels einer Steuereinrichtung der Dauerbremsanlage angefordertes Dauerbremsmoment, und dass die Motorbremseinrichtung deaktiviert wird, wenn das für das Dauerbremsmoment angeforderte Retardermoment kleiner als ein für einen optimalen Retarder-Arbeitsbereich vorgegebener Momentenschwellwert ist.

7. Verfahren nach Anspruch 6, **dadurch gekennzeichnet, dass** das Retardermoment bei aktivierter, als schwarzweiß-Motorbremse ausgebildeter Motorbremseinrichtung in der Höhe des Betrages des zugeschalteten Motorbremsmomentes substituiert wird.

8. Verfahren nach Anspruch 6 oder 7, **dadurch gekennzeichnet, dass** der Retarder-Momentenschwellwert nach folgender Gleichung gebildet wird:

$$M_{Schwell\text{-}Retarder} = M_{Max\text{-}Retarder}\,(n_{Abtriebswelle}) * Faktor_{Retarder}\,(n_{Abtriebswelle})$$

mit:

$Faktor_{Retarder}$ = 0 bis 2,5
$M_{Max\text{-}Retarder}$ = maximal verfügbares Drehmoment des Retarders für eine aktuelle Abtriebswellendrehzahl
$n_{Abtriebswelle}$ = aktuelle Abtriebswellendrehzahl

9. Verfahren nach Anspruch 8, **dadurch gekennzeichnet, dass** der $Faktor_{Retarder}$ in Abhängigkeit von einem vorgegebenen Zuschaltzeitpunkt der Motorbremseinrichtung für definierte Belastungszustände und/oder Dauerbremsanforderungen vorgegeben wird.

10. Verfahren nach einem der Ansprüche 6 bis 9, **dadurch gekennzeichnet, dass** der Motorbrems-Momentenschwellwert nach folgender Gleichung gebildet wird:

$$M_{Schwell\text{-}Motorbremse} = M_{Max\text{-}Motorbremse}\,(n_{Abtriebswelle}) * Faktor_{Motorbremse}\,(n_{Abtriebswelle})$$

mit $Faktor_{Motorbremse}$ = 0 bis 2,5
$M_{Max\text{-}Motorbremse}$ = maximal verfügbares Drehmoment der Motorbremseinrichtung für eine aktuelle Abtriebswellendrehzahl
$n_{Abtriebswelle}$ = aktuelle Abtriebswellendrehzahl als Funktion der Motordrehzahl und der Getriebeübersetzung.

11. Verfahren nach Anspruch 10, **dadurch gekennzeichnet, dass** der $Faktor_{Motortremse}$ in Abhängigkeit von einem vorgegebenen Zuschaltzeitpunkt der Motorbremseinrichtung für definierte Belastungszustände und/oder Dauerbremsanforderungen vorgegeben wird.

12. Vorrichtung zur Durchführung eines Verfahrens nach einem der Ansprüche 1 bis 11, mit einer Dauerbremsanlage, die eine Motorbremseinrichtung und eine Retardereinrichtung sowie eine Steuereinrichtung aufweist, mittels der ein Bremsmoment von der Motorbremseinrichtung und der Retardereinrichtung anforderbar und ent sprechend vorgegebener Abtriebswellendrehzahl-Parameter als Fahrparameter einer Abtriebswelle eines Antriebsstranges zuteilbar ist.

13. Vorrichtung nach Anspruch 12, **dadurch gekennzeichnet, dass** die Retardereinrichtung ein Sekundärretarder ist, der im Antriebsstrang hinter dem Getriebe verbaut ist, insbesondere in das Getriebe integriert oder an dieses angebaut ist.

14. Vorrichtung nach Anspruch 12 oder 13, **dadurch gekennzeichnet, dass** die Motorbremseinrichtung als zu- oder abschaltbare schwarz/weiß-Motorbremse ausgebildet ist.

## Claims

1. Procedure for determining the switch-on and switch-off conditions for an engine-braking device in a continuous braking system of a vehicle, and in particular of a commercial vehicle, in which a continuous brake moment is applied on an output shaft of an output train using a brake torque requested from a retarder unit by a control unit in the continuous braking system, depending on specified driving parameters,
   **characterised in that**

   - the brake torque is also requested by an engine-braking device
   - the activation and deactivation of the engine-braking device is specified on the basis of at least one torque threshold value, which is determined depending on an output shaft speed of the output shaft.

**2.** Procedure in accordance with claim 1, **characterised in that** the activation and deactivation of the engine-braking device is specified on the basis of an output-shaft speed of the output shaft, such that at least one torque threshold value dependent on the output-shaft speed is defined, which torque threshold value is compared with at least one torque comparative value, and especially with a requested brake torque, in such a way that the engine-braking device is activated or deactivated at a specified output shaft speed and/or a specified output shaft torque on the basis of the comparison result.

**3.** Procedure in accordance with claim 1 or 2, **characterised in that** at least one torque threshold value is specified so that, at high output shaft speeds forming an initial output shaft speed range, the engine-braking device is activated at an earlier time than at comparatively lower output shaft speeds which do not lie in the initial output shaft speed range.

**4.** Procedure in accordance with claim 3, **characterised in that** the lower output shaft speeds compared with the initial output shaft speed range are divided into a second, medium output shaft speed range following on from the initial output shaft speed range and a third, lower output shaft speed range following on from this medium output shaft speed range and showing comparatively lower output shaft speeds, whereby the third, lower output shaft speed range includes such output shaft speeds at which no stepless transition is possible between an engine-braking device arranged as a black-and-white engine brake and the retarder unit, and that, in the medium output shaft speed range, the engine-braking device is activated at a later time than in the first, upper output shaft speed range, whereas in the third, lower output shaft speed range the engine-braking device is activated when an engine-braking torque threshold is reached, which threshold is specified for the current output shaft speed.

**5.** Procedure in accordance with one of claims 1 to 4, **characterised in that** a retarder torque threshold value is specified on the basis of a retarder torque that is available in relation to a specific output shaft speed and an engine-braking torque threshold is specified on the basis of an engine-braking torque available in relation to a specific output shaft speed, such that the engine-braking device is activated if both the retarder torque threshold value and the engine-braking torque threshold value are smaller than a continuous braking torque that is requested by a control unit of the continuous braking system and which continuous braking torque acts as a torque comparative value, and that the engine-braking device is deactivated if the retarder torque requested for the continuous braking torque is smaller than a torque threshold value specified for an optimum retarder operating range.

**6.** Procedure in accordance with claim 5, **characterised in that** a maximum available retarder torque and a maximum available engine-braking torque are specified for a current output shaft speed, that a retarder torque threshold value is specified on the basis of the maximum available retarder torque and an engine-braking torque threshold is specified on the basis of the maximum available engine-braking torque, such that the engine-braking device is activated if both the retarder torque threshold value and the engine-braking torque threshold value are smaller than a continuous braking torque that is requested by a control unit of the continuous braking system and that acts as a torque comparative value, and that the engine-braking device is deactivated if the retarder torque requested for the continuous-braking torque is smaller than a torque threshold value specified for an optimum retarder operating range.

**7.** Procedure in accordance with claim 6, **characterised in that** the retarder torque with an activated engine-braking device designed as a black-and-white engine brake is substituted in the amount of the value of the activated engine-braking torque.

**8.** Procedure in accordance with claim 6 or 7, **characterised in that** the retarder torque threshold value is defined according to the following equation:

$$M_{Retarder\ thresh.} = M_{Retarder\ max.}(n_{Output\ shaft}) \times factor_{Retarder}(n_{Output\ shaft})$$

with:

$Factor_{Retarder}$ = 0 to 2.5
$M_{Retarder\ max.}$ = maximum available torque of the retarder for a current output shaft speed
$n_{Output\ shaft}$ = current output shaft speed

**9.** Procedure in accordance with claim 8, **characterised in that** the $factor_{Retarder}$ is specified for defined load conditions and/or continuous braking requirements depending on a specified activation time of the engine-braking device.

**10.** Procedure in accordance with claims 6 to 9, **characterised in that** the engine-braking torque threshold value is defined according to the following equation:

$$M_{\text{Engine-braking thresh.}} = M_{\text{Engine-braking max.}}\ (n_{\text{Output shaft}}) \times \text{factor}\ (n_{\text{Output shaft}})$$

with factor$_{\text{Engine brake}}$ = 0 to 2.5
$M_{\text{Engine-braking max.}}$ = maximum available torque of the engine-braking device for a current output shaft speed
$n_{\text{Output shaft}}$ = current output shaft speed as a function of the engine speed and the gearbox ratio.

**11.** Procedure in accordance with claim 10, **characterised in that** the factor$_{\text{Engine brake}}$ is specified for defined load conditions and/or continuous braking requirements depending on a specified activation time of the engine-braking device.

**12.** System for implementing a procedure in accordance with one of the claims 1 to 11 with a continuous braking system, which system features an engine-braking device and a retarder unit and a control unit, with which system a brake torque can be requested from the engine-braking device and the retarder unit and can be allocated according to specified output shaft speed parameters as the driving parameters of an output shaft of a drive train.

**13.** System in accordance with claim 12, **characterised in that** the retarder unit is a secondary retarder, which secondary retarder is fitted in the drive train behind the gearbox, is particularly integrated into the gearbox or is attached to it.

**14.** System in accordance with claim 12 or 13, **characterised in that** the engine-braking device is arranged as a black-and-white engine brake that can be activated or deactivated.

**Revendications**

**1.** Procédure pour déterminer la condition d'activation et de désactivation d'un dispositif de frein moteur d'une installation de frein continu d'un véhicule, en particulier d'un véhicule industriel, sur lequel un couple de frein continu est réglé par un dispositif de commande du système de freinage continu, en fonction de paramètres de roulage spécifiés, sur un arbre de sortie d'une chaîne cinématique à l'aide d'un couple de freinage demandé par un dispositif de ralentisseur,
**caractérisée en ce que**

- le couple de freinage est demandé également par un dispositif de frein moteur
- l'activation et la désactivation du dispositif de frein moteur sont spécifiées en fonction d'au moins une valeur seuil de couple déterminée en fonction d'une vitesse de rotation de l'arbre de sortie.

**2.** Procédure selon la revendication 1, **caractérisée en ce que** l'activation et la désactivation du dispositif de frein moteur sont spécifiées en fonction d'une vitesse de rotation de l'arbre de sortie de telle manière qu'au moins une valeur seuil de couple liée à la vitesse de rotation de l'arbre de sortie soit déterminée, cette valeur étant comparée avec au moins une valeur de comparaison de couples, en particulier avec un couple de freinage demandé, de telle manière qu'à l'aide du résultat de la comparaison, le dispositif de frein moteur soit activé ou désactivé à une vitesse de rotation spécifiée de l'arbre de sortie et/ou à un couple spécifié de l'arbre de sortie.

**3.** Procédure selon la revendication 1 ou 2, **caractérisée en ce qu'**au moins une valeur seuil de couple au minimum est spécifiée de telle manière qu'à des vitesses de rotation élevées de l'arbre de sortie constituant une première plage de vitesses de rotation de l'arbre de sortie le dispositif de frein moteur est activé plus tôt qu'à des vitesses de rotation plus faibles de l'arbre de sortie, qui ne sont pas situées dans la première plage de vitesses de rotation de l'arbre de sortie.

**4.** Procédure selon la revendication 3, **caractérisée en ce que** les vitesses de rotation de l'arbre de sortie plus faibles par rapport à la première plage de vitesses de rotation de l'arbre de sortie sont réparties en une deuxième plage de vitesses de rotation moyennes joignant la première plage de vitesses de rotation de l'arbre de sortie et en une troisième plage de vitesses de rotation inférieures de l'arbre de sortie joignant cette plage de vitesses de rotation moyennes de l'arbre de sortie et présentant des vitesses de rotation de l'arbre de sortie plus faibles que cette dernière, la troisième plage de vitesses de rotation inférieures de l'arbre de sortie comprenant les vitesses de rotation de l'arbre de sortie auxquelles aucun passage progressif entre un dispositif de frein moteur configuré comme frein moteur Tout Ou Rien et le dispositif de ralentisseur n'est possible et que dans la plage de vitesses de rotation moyennes de l'arbre de sortie le dispositif de frein moteur est activé plus tard que dans la première plage de vitesses de rotation supérieures de l'arbre de sortie, tandis que dans la troisième plage de vitesses de rotation inférieures de l'arbre de sortie, le dispositif de frein moteur est activé en cas d'atteinte d'une valeur seuil de couple de frein moteur spécifiée pour la vitesse de rotation actuelle de l'arbre de sortie.

5. Procédure selon l'une des revendications 1 à 4, **caractérisée en ce que** sur la base d'un couple de ralentisseur disponible en référence à une vitesse de rotation déterminée de l'arbre de sortie une valeur seuil de couple de ralentisseur et sur la base d'un couple de frein moteur disponible en référence à une vitesse de rotation déterminée de l'arbre de sortie une valeur seuil de couple de frein moteur sont spécifiées de telle manière que le dispositif de frein moteur soit activé dès qu'aussi bien la valeur seuil de couple de ralentisseur que la valeur seuil de couple de frein moteur sont inférieures à un couple de frein continu constituant une valeur de comparaison de couples et demandé par un dispositif de commande de l'installation de frein continu et **en ce que** le dispositif de frein moteur est désactivé dès que le couple de ralentisseur demandé pour le couple de frein continu est inférieur à une valeur seuil de couple spécifiée pour une plage de fonctionnement optimale du ralentisseur.

6. Procédure selon la revendication 5, **caractérisée en ce qu'**un couple de ralentisseur maximum disponible pour une vitesse de rotation actuelle de l'arbre de sortie et un couple de frein moteur maximum disponible sont déterminés, **en ce que**, sur la base du couple de ralentisseur maxi disponible une valeur seuil de couple de ralentisseur et sur la base du couple de frein moteur maximum disponible, une valeur seuil de couple de frein moteur sont spécifiées de telle manière que le dispositif de frein moteur soit activé dès qu'aussi bien la valeur seuil de couple de ralentisseur que la valeur seuil de couple de frein moteur sont inférieures à un couple de frein continu, constituant une valeur de comparaison de couples, demandé par un dispositif de commande de l'installation de frein continu et **en ce que** le dispositif de frein moteur est désactivé dès que le couple de ralentisseur demandé pour le couple de frein continu est inférieur à une valeur seuil de couple spécifiée pour une plage de fonctionnement optimale du ralentisseur.

7. Procédure selon la revendication 6, **caractérisée en ce que** le couple de ralentisseur est substitué par la valeur de couple du frein moteur fournie lorsque le dispositif de frein moteur configuré comme frein moteur Tout Ou Rien est activé.

8. Procédure selon la revendication 6 ou 7, **caractérisée en ce que** la valeur seuil de couple de ralentisseur est formée selon l'équation suivante :

$$M_{\text{Seuil ralentisseur}} = M_{\text{Maxi ralentisseur}} (n_{\text{Arbre de sortie}}) * \text{Facteur}_{\text{Ralentisseur}} (n_{\text{Arbre de sortie}})$$

dans laquelle :

$\text{Facteur}_{\text{Ralentisseur}} = 0$ à $2,5$

$M_{\text{Maxi ralentisseur}} =$ Couple maximum disponible du ralentisseur pour une vitesse de rotation actuelle de l'arbre de sortie

$n_{\text{Arbre de sortie}} =$ Vitesse de rotation actuelle de l'arbre de sortie

9. Procédure selon la revendication 8, **caractérisée en ce que** le facteur ralentisseur est spécifié en fonction d'un moment de mise en marche spécifié du dispositif de frein moteur pour des états de charge et/ou des demandes de frein continu définis.

10. Procédure selon l'une des revendications 6 à 9, **caractérisée en ce que** la valeur seuil de couple de frein moteur est formée selon l'équation suivante :

$$M_{\text{Seuil frein moteur}} = M_{\text{Maxi frein moteur}} (n_{\text{Arbre de sortie}}) * \text{Facteur} (n_{\text{Arbre de sortie}})$$

avec facteur$_{\text{Frein moteur}}$ = 0 à 2,5

M$_{\text{Maxi frein moteur}}$ = Couple maxi disponible du dispositif de frein moteur pour une vitesse de rotation actuelle de l'arbre de sortie

n$_{\text{Arbre de sortie}}$ = Vitesse de rotation actuelle de l'arbre de sortie en fonction du régime moteur et de la démultiplication de la boîte de vitesses.

**11.** Procédure selon la revendication 10, **caractérisée en ce que** le facteur$_{\text{Frein moteur}}$ est spécifié en fonction d'un moment de mise en marche spécifié du dispositif de frein moteur pour des états de charge et/ou des demandes de frein continu définis.

**12.** Dispositif pour la réalisation d'une procédure selon l'une des revendications 1 à 11 avec une installation de frein continu présentant un dispositif de frein moteur et un dispositif de ralentisseur ainsi qu'un dispositif de commande pouvant demander un couple de freinage au dispositif de frein moteur et au dispositif de ralentisseur et l'attribuer comme paramètre de roulage à un arbre de sortie d'une chaîne cinématique en fonction de paramètres de vitesse de rotation spécifiés de l'arbre de sortie.

**13.** Dispositif selon la revendication 12, **caractérisé en ce que** le dispositif de ralentisseur est un ralentisseur secondaire intégré à la chaîne cinématique en aval de la boîte de vitesses, en particulier intégré à la boîte de vitesses ou monté sur la boîte de vitesses.

**14.** Dispositif selon la revendication 12 ou 13, **caractérisé en ce que** le dispositif de frein moteur est configuré comme frein moteur Tout Ou Rien pouvant être activé et désactivé.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0247948 A1